# FASCICULE DE BREVET EUROPEEN

(11) **EP 3 689 704 B1**
(45) Date de publication et mention de la délivrance du brevet: **19.07.2023**
(21) Numéro de dépôt: 20155412.8
(22) Date de dépôt: 04.02.2020
(51) Int. Cl.: B61D 27/00

(54) **DISPOSITIF DE DIFFUSION POUR VÉHICULE FERROVIAIRE**
SPRÜHVORRICHTUNG FÜR EIN SCHIENENFAHRZEUG
DIFFUSION DEVICE FOR A RAILWAY VEHICLE

(30) Priorité: 04.02.2019 FR 1901037
(43) Date de publication de la demande: 05.08.2020
(73) Titulaire: ALSTOM Transport Technologies, 93400 Saint-Ouen (FR)
(72) Inventeur: DELBERGHE, Maxime, 59000 Lille (FR); LEBER, Yohan, 59300 Valenciennes (FR); HOFFMANN, Yannick, 59264 Onnaing (FR)
(74) Mandataire: Lavoix

(56) Documents cités:
- EP-A1- 1 772 604
- EP-A2- 0 114 981
- WO-A1-2012/143321
- WO-A1-2014/125784
- WO-A1-2014/131582
- CN-U- 206 826 353
- DE-A1- 10 011 477
- FR-A1- 3 024 412

## Description

La présente invention concerne un dispositif de diffusion pour véhicule ferroviaire, définissant un canal de circulation propre à faire circuler un flux d'air, le dispositif de diffusion étant constitué de différentes parties.

Le dispositif de diffusion est destiné à diffuser le flux d'air dans ur compartiment d'une voiture de véhicule ferroviaire.

On connait des documents EP 0 114 981 et WO 2014/131582 de tels dispositifs de diffusion.

Le dispositif de diffusion est alors raccordé à un système de climatisation. Des systèmes de climatisation sont connus. Ils sont notamment utilisés pour assurer un bon échange d'air entre l'intérieur et l'extérieur du véhicule ferroviaire et une bonne circulation d'air dans le compartiment voyageur. Ces systèmes de climatisation comprennent généralement un système de chauffage, ventilation et climatisation (mieux connu sous la désignation « système CVC » ou « système HVAC », de l'anglais « heating, ventilation, and air conditioning »), disposé en amont du dispositif de diffusion suivant le sens de circulation du flux d'air.

Il est également connu des dispositifs de diffusion du type précité comprenant des tôles de métal assemblé avec des rivets et dont l'étanchéité est assurée par l'ajout de joints d'étanchéité entre les tôles, par exemple en mastic.

Le système CVC est générateur de bruit, et ce bruit est susceptible de se propager jusqu'au compartiment voyageur via le dispositif de diffusion, provoquant une gêne des voyageurs.

Afin de prévenir une telle gêne, il est connu d'entourer le dispositif de diffusion d'une couche d'isolant phonique.

Toutefois, ces dispositifs de diffusion connus ne donnent pas entière satisfaction. En effet, un tel dispositif de diffusion est volumineux et lourd. De plus, l'assemblage des différentes parties du dispositif de diffusion est long et compliqué.

Un but de l'invention est d'obtenir un dispositif de diffusion moins volumineux et plus léger tout en étant facilement assemblable.

A cet effet, l'invention a pour objet un dispositif de diffusion selon la revendication 1.

L'utilisation de fibres thermo-compressées permet d'obtenir un dispositif de diffusion ayant des propriétés d'isolation phoniques améliorées de telle sorte qu'il n'est pas nécessaire d'ajouter une couche d'isolant supplémentaire. Ainsi, le dispositif de diffusion est plus léger et moins volumineux. L'assemblage du dispositif de diffusion est donc également facilité.

Le dispositif de diffusion peut comprendre l'une ou plusieurs caractéristiques des revendications 2 à 5.

L'invention concerne également un système de climatisation selon la revendication 6.

L'invention concerne également un procédé d'assemblage d'un dispositif de diffusion selon la revendication 7.

Le procédé d'assemblage peut comprendre l'une ou plusieurs caractéristiques des revendications 8 et 9.

L'invention sera mieux comprise à la lecture de la description qui suit, donnée uniquement à titre d'exemple, et faite en se référant aux dessins annexés, sur lesquels :
[Fig 1] la figure 1 est une vue schématique de côté d'un véhicule ferroviaire comprenant une pluralité de dispositifs de diffusion selon l'invention ;
[Fig 2] la figure 2 est une vue schématique en coupe suivant un plan II-II' de la figure 1 ;
[Fig 3] la figure 3 est une vue en perspective d'un des dispositifs de diffusion de la figure 1 ; et
[Fig 4] la figure 4 est une vue éclatée du dispositif de diffusion de la figure 3.

Dans la description, les termes « horizontal », «vertical », « haut », « bas », « supérieur » et « inférieur » sont définis par rapport à une direction d'élévation d'un véhicule lorsqu'il est disposé sur des rails ou sur une route.

La direction longitudinale est définie par la direction de circulation du véhicule et la direction transversale est la direction sensiblement perpendiculaire à la direction longitudinale et à la direction d'élévation du véhicule.

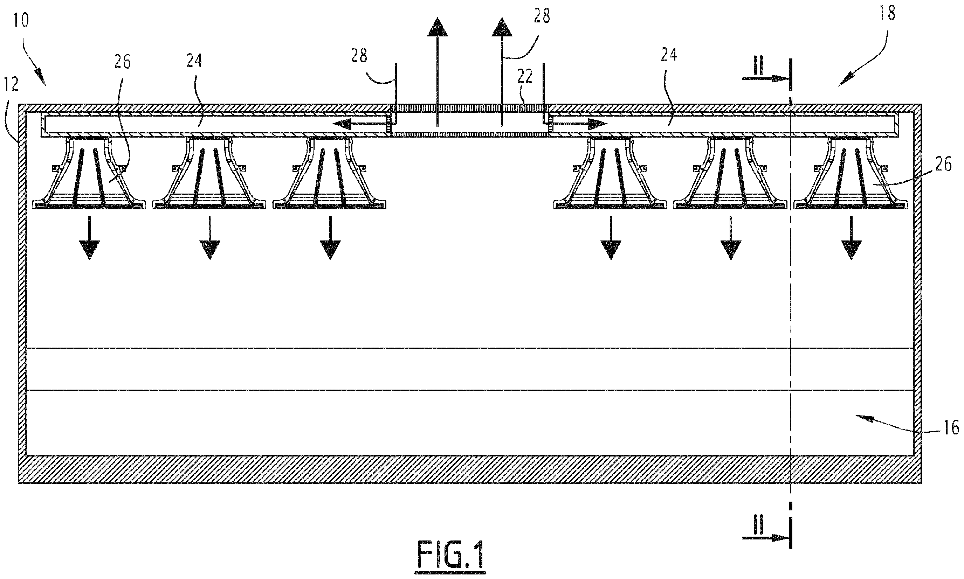

La figure 1 illustre une voiture de véhicule ferroviaire 10 selon l'invention. En variante, le véhicule est un véhicule de transport sur route, par exemple un bus.

La voiture de véhicule ferroviaire 10 comprend de façon connue au moins une caisse 12 portée par un bogie et des roues, non représentés.

Chaque caisse 12 comprend un compartiment voyageur 16 et au moins un système de climatisation 18.

Le compartiment voyageur 16 est configuré pour recevoir des passagers et comprend par exemple des sièges, non représentés, permettant aux voyageurs de s'assoir pendant le transport.

Selon un mode de réalisation, le système de climatisation 18 est monté au-dessus du compartiment voyageur 16. En variante, le système de climatisation est installé sous le compartiment voyageur.

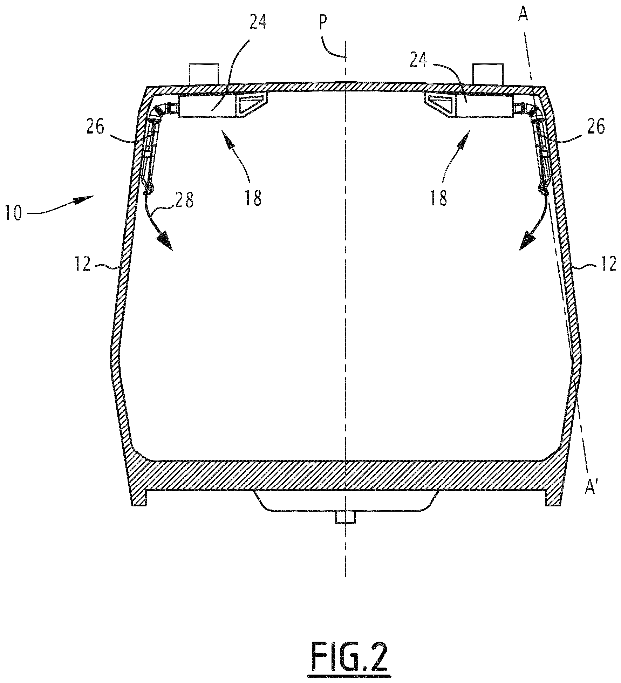

Comme visible sur la figure 2, le véhicule ferroviaire 10 comprend ici deux systèmes de climatisation 18 disposés de part et d'autre d'un plan vertical longitudinal médian P, passant sensiblement par le centre de la voiture selon la direction transversale.

Le système de climatisation 18 et le compartiment voyageur 16 sont avantageusement séparés par une paroi de séparation, non représentée, formant le plafond du compartiment voyageur 16 dans le cas d'un système de climatisation 18 installé au-dessus du compartiment voyageur.

Le système de climatisation 18 produit et distribue un flux d'air au compartiment voyageur 16.

Le système de climatisation 18 comporte un groupe de climatisation 22 produisant le flux d'air circulant, au moins un conduit 24 recevant le flux d'air produit par le groupe de climatisation 22 et au moins un dispositif de diffusion 26 distribuant le flux d'air dans le compartiment voyageur 16. Un tel dispositif de diffusion 26 est également connu sous le nom de diffuseur.

La circulation du flux d'air est représentée sur les figures par les flèches 28.

Comme visible sur la figure 1, le groupe de climatisation 22 permet l'échange d'air entre l'extérieur et l'intérieur du véhicule ferroviaire 10, par exemple en aspirant l'air de l'extérieur du véhicule ferroviaire 10 et en le refoulant vers l'intérieur du véhicule ferroviaire 10.

Avantageusement, le groupe de climatisation 22 est propre à chauffer ou refroidir l'air ainsi échangé.

Chaque conduit 24 est relié fluidiquement au groupe de climatisation 22.

Chaque conduit 24 définit un canal de circulation propre à faire circuler le flux d'air produit par le groupe de climatisation 22.

Chaque conduit 24 s'étend longitudinalement le long de la caisse 12.

Comme visible sur la figure 1, le système de climatisation 18 comprend ici deux conduits 24 s'étendant de part et d'autre du groupe de climatisation 20 et définissant chacun un canal de distribution.

Chaque conduit 24 présente avantageusement une section transversale de forme sensiblement rectangulaire.

Chaque conduit 24 est fixé sur la partie supérieure de la caisse 12.

Avantageusement, chaque conduit 24 comprend une couche d'isolant phonique disposée autour du canal de distribution.

Chaque dispositif de diffusion 26 est relié fluidiquement à l'un des conduits 24 afin d'être raccordé au système de climatisation 18.

En particulier, comme visible sur la figure 2, chaque dispositif de diffusion 26 est fixé latéralement sur le conduit 24.

Comme visible sur la figure 1, le système de climatisation 18 comprend ici une pluralité de dispositifs de diffusion 26.

Avantageusement, le système de climatisation 18 comprend au moins vingt dispositifs de diffusion 26 répartis longitudinalement le long des deux conduits 24.

Chaque dispositif de diffusion 26 définit un canal de circulation 30 propre à faire circuler le flux d'air provenant du conduit 24.

Chaque dispositif de diffusion 26 comprend une entrée 32 du flux d'air et une sortie 34 du flux d'air.

L'entrée 32 du flux d'air est raccordée au conduit 24.

L'entrée 32 présente avantageusement une section transversale de forme sensiblement rectangulaire.

La sortie 34 du flux d'air est raccordée au compartiment voyageur 16 et débouche dans celui-ci afin de diffuser l'air dans le compartiment.

La sortie 34 présente avantageusement une section transversale de forme sensiblement rectangulaire.

Chaque dispositif de diffusion 26 est ainsi propre à faire circuler le flux d'air de l'entrée 32 à la sortie 34 afin de distribuer le flux d'air provenant du conduit 24 au compartiment voyageur 16.

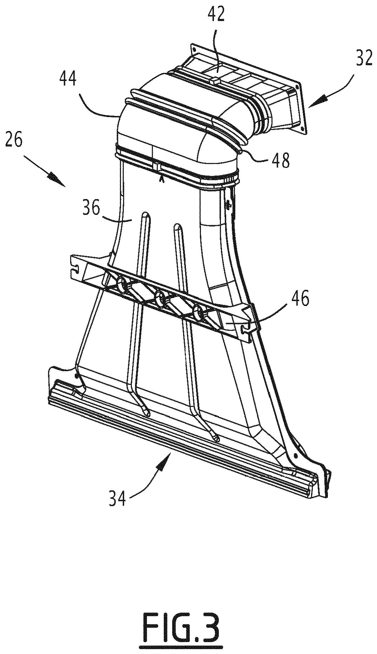

Comme visible sur la figure 3, la forme du canal de circulation 30 est agencée pour dévier la direction de circulation du flux d'air d'un angle compris entre 1° et 90° entre l'entrée 32 et la sortie 34, notamment d'un angle supérieur ou égal à 30°.

En particulier, selon un mode de réalisation, le canal de circulation 30 est agencé pour recevoir au niveau de l'entrée 32 un flux d'air circulant selon une direction sensiblement horizontale et transversale.

Le canal de circulation 30 est agencé pour distribuer au niveau de la sortie 34 un flux d'air circulant selon une direction verticale vers le bas de la caisse 12. En d'autres termes, selon ce mode de réalisation, le canal de circulation 30 dévie la direction du flux d'air d'un angle sensiblement égal à 90°.

Les directions de circulation du flux d'air 30 sont données à titre d'exemple et des agencements différents du dispositif de diffusion 26 dans la caisse 12 sont envisageables.

En variante, le canal de circulation 30 est par exemple agencé pour distribuer au niveau de la sortie 34 un flux d'air circulant selon une direction horizontale de la caisse 12.

Avantageusement, le canal de circulation 30 définit une section de passage de l'air de surface croissante dans le sens de circulation du flux d'air.

En particulier, la section de passage de l'entée 32 est comprise avantageusement entre 100 cm² et 500 cm².

La section d'air croissante permet de réduire la vitesse du flux d'air avant son entrée dans le compartiment voyageur 16 et de favoriser l'aspiration de l'air du conduit 24.

La section de passage de la sortie 34 est comprise avantageusement entre 100 cm² et 1000 cm².

Le dispositif de diffusion 26 est constitué de différentes parties.

Au moins une des parties du dispositif de diffusion 26 est composée de fibres thermo-compressées.

Les fibres sont avantageusement composées d'un matériau minéral ou polymère.

La thermocompression des fibres est réalisée avantageusement à une température supérieure 150° C.

La thermocompression des fibres est réalisée avantageusement à une pression supérieure à 20 bar.

L'utilisation des fibres thermo-compressées permet d'obtenir de bonnes caractéristiques d'insonorisation tout en présentant une masse volumique réduite.

De plus, les parties en fibres thermo-compressées sont peu onéreuses et facilement réalisables.

Dans un mode de réalisation avantageux, le dispositif de diffusion 26 comprend deux parois 36 composées de fibres thermo-compressées.

Les deux parois 36 sont assemblées entre elles afin de former une partie principale du canal de circulation 30 du flux d'air. Chaque paroi 36 présente une épaisseur suffisante pour assurer une insonorisation suffisante pour le confort des voyageurs sans ajout nécessaire d'une couche d'isolant phonique supplémentaire. Ainsi, chaque paroi 36 présente avantageusement une épaisseur supérieure à 2 mm. Chaque paroi 36 présente avantageusement une épaisseur inférieure à 4 mm.

Comme visible sur la figure 2, la partie principale s'étend selon un axe A-A' formant un angle compris entre 0° et 45° avec un axe vertical.

En particulier, la partie principale s'étend sensiblement parallèlement à la paroi latérale de la caisse 12 à laquelle le dispositif de diffusion 26 est fixé.

La partie principale comprend avantageusement au moins un déflecteur 38 disposé dans ladite partie du canal de circulation 30.

Chaque déflecteur 38 permet d'orienter le flux d'air dans la partie principale et ainsi d'éviter des recirculations d'air dans le dispositif de diffusion 26.

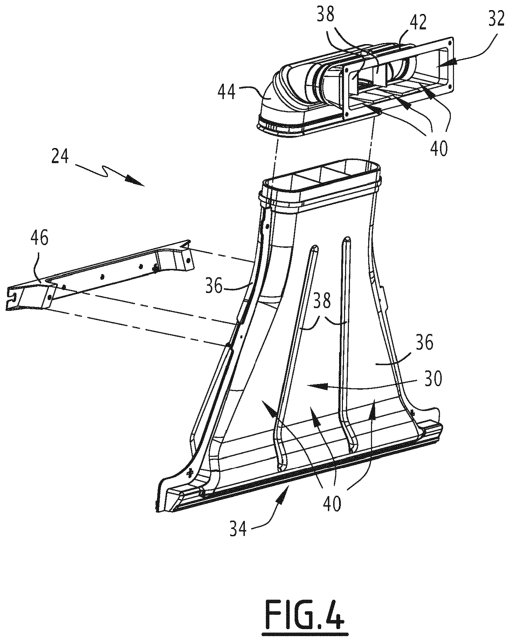

Comme visible sur la figure 4, la partie principale comprend ici deux déflecteurs 38 séparant le canal de circulation 30 en trois sous-canaux de circulation 40.

Chaque déflecteur 38 comprend une surface de guidage de l'air orientant le flux d'air circulant dans le canal de circulation 30.

Dans un mode de réalisation avantageux, le dispositif de diffusion 26 comprend, en outre, un embout 42, un coude 44 et un moyen de fixation 46.

L'embout 42 est propre à être fixé au conduit 24 par exemple au moyen de vis.

L'embout 42 définit l'entrée 34 du flux d'air.

L'embout 42 est avantageusement composé d'un matériau plastique tel du polyamide 6.6 (PA6.6).

L'embout 42 comprend avantageusement au moins un déflecteur 38 disposé dans le canal de circulation 30.

Comme visible sur la figure 4, l'embout 42 comprend ici deux déflecteurs 38 séparant le canal de circulation 30 en trois sous-canaux de circulation 40.

Le coude 44 est fixé à l'embout 38.

Le coude 44 est agencé pour dévier la direction de circulation du flux d'air d'un angle supérieur ou égal à 45° entre l'entrée et la sortie du flux d'air.

Le coude 44 est avantageusement composé d'un matériau flexible tel un caoutchouc en éthylène-propylène-diène monomère (EPDM).

Le coude 44 définit avantageusement au moins un pli 48 s'étendant transversalement par rapport à la circulation du flux d'air et s'étendant circonférentiellement autour du coude 44.

Chaque pli 48 est propre à s'allonger ou se comprimer en fonction des contraintes appliquées sur le pli 48.

La flexibilité du coude 44 et l'au moins un pli 48 permettent d'ajuster la forme du dispositif de diffusion 26 afin d'éviter des contraintes statiques dans le dispositif de diffusion 26 lorsqu'il est fixé à la caisse 12.

Ainsi, toutes les parties rigides du dispositif de diffusion 26 destinées à la circulation de l'air, en dehors de l'embout 42 et du coude 44, sont composées de fibres thermo-compressées.

Le moyen de fixation 46 est fixé à l'une des parois 36, à l'extérieur du canal de circulation 30.

Le moyen de fixation 46 est propre à être fixé à la caisse 12 afin de permettre la fixation du dispositif de diffusion 26 à la caisse 12, notamment à une paroi latérale de la caisse.

Le moyen de fixation 46 est par exemple fixé à la caisse 12 au moyen de vis.

Le moyen de fixation 46 est avantageusement composé d'un matériau plastique tel du polyamide 6.6 (PA6.6).

Un procédé d'assemblage d'un dispositif de diffusion 26 selon l'invention va maintenant être décrit.

Initialement, les différentes parties du dispositif de diffusion 26 sont fournies, au moins l'une des parties étant composée de fibres thermo-compressées.

Puis, les différentes parties sont assemblées entre elles afin de former le dispositif de diffusion 26.

En particulier, les deux parois 36 sont fixées entre elles afin de former une partie principale du canal de circulation 30 du flux d'air.

Le moyen de fixation 46 est fixé à une des parois 36.

Puis, le coude 44 et l'embout 42 sont assemblés aux deux parois 36.

Avantageusement, l'assemblage des différentes pièces du dispositif de diffusion 36 est réalisé par soudage par ultrasons.

Lors d'un soudage par ultrasons, des vibrations à haute fréquences sont appliquées aux deux pièces à fixer entre elles et la soudure se fait grâce à la chaleur engendrée à l'interface des deux pièces.

Le soudage par ultrasons permet un soudage rapide et aisé pour un opérateur tout en évitant l'ajout de rivets ou de mastic.

L'assemblage des différentes pièces du dispositif de diffusion 26 est ainsi réalisé sans moyen de fixation additionnel.

Puis, le dispositif de diffusion 26 est raccordé au conduit 24, par exemple au moyen de vis.

Ensuite, le dispositif de diffusion 26 est fixé à la caisse 12 du véhicule ferroviaire 10 via le moyen de fixation 46, par exemple au moyen de vis.

On conçoit alors que la présente invention présente un certain nombre d'avantages.

L'utilisation de fibres thermo-compressées pour au moins une des parties du dispositif de diffusion 26 permet d'obtenir un dispositif de diffusion 26 ayant des propriétés d'isolation phoniques améliorées tout en permettant de réduire la taille et le poids du dispositif de diffusion 26. En particulier, le dispositif de diffusion 26 présente des parois 36 moins épaisses.

De plus, il n'est pas nécessaire d'ajouter une couche d'isolant supplémentaire, ce qui permet de réduire davantage le poids et la taille du dispositif de diffusion 26.

L'assemblage du dispositif de diffusion 26 est également facilité. En effet, le dispositif de diffusion 26 comprend peu de pièces différentes et ainsi nécessite moins d'étapes d'assemblage.

De plus, le soudage par ultrason est rapide et aisée et évite l'usage de rivets et de mastic.

## Revendications

1. Dispositif de diffusion (26) d'un flux d'air dans le compartiment (16) d'une voiture de véhicule ferroviaire (10), définissant un canal de circulation (30) propre à faire circuler un flux d'air, le dispositif de diffusion (26) étant constitué de différentes parties,
**caractérisé en ce qu'**au moins une des parties du dispositif de diffusion (26) est composée de fibres thermo-compressées,
**en ce que** le dispositif de diffusion (26) comprend deux parois (36) composées de fibres thermo-compressées, les deux parois (36) étant assemblées entre elles afin de former une partie du canal de circulation (30) du flux d'air,
**en ce que** le dispositif de diffusion (26) comprend une entrée (32) du flux d'air et une sortie (34) du flux d'air et est propre à faire circuler le flux d'air de l'entrée (32) à la sortie (34);
et **en ce que** la sortie (34) du flux d'air est apte à être raccordée au dit compartiment (16).

2. Dispositif de diffusion (26) selon la revendication 1, dans lequel le canal de circulation (30) définit une section de passage de l'air de surface croissante dans le sens de circulation du flux d'air.

3. Dispositif de diffusion (26) selon l'une quelconque des revendications précédentes, dans lequel la forme du canal de circulation (30) est agencée pour dévier la direction de circulation du flux d'air d'un angle compris entre 1° à 90° entre l'entrée (32) et la sortie (34), notamment d'un angle supérieur ou égal à 30°.

4. Dispositif de diffusion (26) selon l'une quelconque des revendications précédentes, comprenant au moins un déflecteur (38) disposé dans le canal de circulation (30), ledit déflecteur (38) comprenant une surface de guidage de l'air orientant le flux d'air circulant dans le canal de circulation (30).

5. Dispositif de diffusion (26) selon l'une quelconque des revendications précédentes, dans lequel chaque paroi (36) en fibres thermo-compressées présente une épaisseur inférieure à 4 mm.

6. Système de climatisation (18) du compartiment d'une voiture de véhicule ferroviaire (10) comprenant au moins un dispositif de diffusion (26) selon l'une quelconque des revendications précédentes.

7. Procédé d'assemblage d'un dispositif de diffusion (26) selon l'une quelconque des revendications 1 à 5 comprenant les étapes suivantes :
- fourniture des différentes parties du dispositif de diffusion (26);
- assemblage des différentes parties.

8. Procédé d'assemblage selon la revendication 7, dans lequel l'assemblage est réalisé par soudage par ultrasons.

9. Procédé d'assemblage selon la revendication 7 ou 8, dans lequel l'assemblage est réalisé sans moyen de fixation additionnel.

## Patentansprüche

1. Diffusionsvorrichtung (26) eines Luftstroms in dem Abteil (16) eines Schienenfahrzeugwagens (10), die einen Zirkulationskanal (30) definiert, der geeignet ist, um einen Luftstrom zirkulieren zu lassen, wobei die Diffusionsvorrichtung (26) aus verschiedenen Teilen besteht,
**dadurch gekennzeichnet, dass** mindestens einer der Teile der Diffusionsvorrichtung (26) aus thermokomprimierten Fasern besteht,
dass die Diffusionsvorrichtung (26) zwei Wände (36) umfasst, die aus thermokomprimierten Fasern bestehen, wobei die zwei Wände (36) miteinander verbunden sind, um einen Teil des Zirkulationskanals (30) für den Luftstrom zu bilden,
dass die Diffusionsvorrichtung (26) einen Einlass (32) des Luftstroms und einen Auslass (34) des Luftstroms umfasst und geeignet ist, um den Luftstrom von dem Einlass zu dem Auslass (34) zirkulieren zu lassen;
und dass der Auslass (34) des Luftstroms geeignet ist, um mit dem Abteil (16) verbunden zu werden.

2. Diffusionsvorrichtung (26) nach Anspruch 1, wobei der Zirkulationskanal (30) einen Luftdurchlassquerschnitt mit zunehmender Oberfläche in der Strömungsrichtung des Luftstroms definiert.

3. Diffusionsvorrichtung (26) nach einem der vorherigen Ansprüche, wobei die Form des Zirkulationskanals (30) ausgebildet ist, um die Zirkulationsrichtung des Luftstroms zwischen dem Einlass (32) und dem Auslass (34) um einen Winkel zwischen 1° und 90° abzulenken, insbesondere um einen Winkel größer als oder gleich wie 30°.

4. Diffusionsvorrichtung (26) nach einem der vorherigen Ansprüche, umfassend mindestens einen in dem Strömungskanal (30) angeordneten Deflektor (38), wobei der Deflektor (38) eine Luftleitfläche aufweist, die den in dem Zirkulationskanal (30) zirkulierenden Luftstrom leitet.

5. Diffusionsvorrichtung (26) nach einem der vorherigen Ansprüche, wobei jede Wand (36) aus thermokomprimierten Fasern eine Stärke von weniger als 4 mm aufweist.

6. Klimaanlage (18) für das Abteil eines Schienenfahrzeugwagens (10), umfassend mindestens eine Diffusionsvorrichtung (26) nach einem der vorherigen Ansprüche

7. Verfahren zum Zusammenbau einer Diffusionsvorrichtung (26) nach einem der Ansprüche 1 bis 5, umfassend die folgenden Schritte:
- Bereitstellen der verschiedenen Teile der Diffusionsvorrichtung (26);
- Zusammenbauen der verschiedenen Teile.

8. Montageverfahren nach Anspruch 7, wobei der Zusammenbau durch Ultraschallschweißen erfolgt.

9. Montageverfahren nach Anspruch 7 oder 8, wobei der Zusammenbau ohne zusätzliche Befestigungsmittel erfolgt.

## Claims

1. Diffuser device (26) for an air flow in the compartment (16) of a railway vehicle (10), defining a circulation channel (30) suitable for circulating an air flow, the diffusion device (26) consisting of different parts,
**characterised in that** at least one of the parts of the diffusion device (26) is composed of thermo-compressed fibres,
**in that** the diffusion device (26) comprises two walls (36) made of thermo-compressed fibres, the two walls (36) being joined together to form part of the airflow channel (30),
**in that** the diffusion device (26) comprises an airflow inlet (32) and an airflow outlet (34) and is adapted to circulate the airflow from the inlet to the outlet (34);
and **in that** the outlet (34) of the air flow is adapted to be connected to said compartment (16).

2. The diffuser (26) according to claim 1, wherein the flow channel (30) defines an increasing surface air flow cross-section in the direction of air flow.

3. Diffuser device (26) according to any of the preceding claims, wherein the shape of the flow channel (30) is arranged to deviate the direction of flow of the air stream by an angle between 1° and 90° between the inlet (32) and the outlet (34), in particular by an angle greater than or equal to 30°.

4. Diffuser device (26) according to any of the preceding claims, comprising at least one deflector (38) arranged in the circulation channel (30), said deflector (38) comprising an air guiding surface directing the air flow circulating in the circulation channel (30).

5. Diffuser device (26) according to any of the preceding claims, wherein each wall (36) of thermo-compressed fibres has a thickness of less than 4 mm.

6. Air-conditioning system (18) for the compartment of a railway vehicle (10), comprising at least one diffusion device (26) according to any of the preceding claims.

7. Method of assembling a diffusion device (26) according to any of claims 1 to 5 comprising the following steps:
- supply of the different parts of the diffusion device (26);
- assembly of the different parts.

8. The joining method according to claim 7, wherein the joining is performed by ultrasonic welding.

9. A method of assembly according to claim 7 or 8, wherein the assembly is performed without additional fastening means.
